# EUROPÄISCHE PATENTSCHRIFT

(11) **EP 3 448 732 B1**
(45) Veröffentlichungstag und Bekanntmachung des Hinweises auf die Patenterteilung: **06.12.2023**
(21) Anmeldenummer: 17726836.4
(22) Anmeldetag: 27.04.2017
(51) Int. Cl.: B61D 35/00, E03F 1/00, B60R 15/04

(54) **ABSAUGVORRICHTUNG FÜR EINEN ABWASSERTANK, NACHRÜSTSET HIERFÜR UND VERFAHREN FÜR DAS LEEREN EINES ABWASSERTANKS**
SUCTION DEVICE FOR A WASTEWATER TANK, RETROFIT KIT THEREFOR AND METHOD FOR EMPTYING A WASTEWATERTANK
DISPOSITIF D'ASPIRATION POUR UN RÉSERVOIR D'EAUX USÉES, KIT D'ADAPTATION À CET EFFET ET PROCÉDURE DE VIDANGE D'UN RÉSERVOIR D'EAUX USÉES

(30) Priorität: 27.04.2016 DE 202016102246 U
(43) Veröffentlichungstag der Anmeldung: 06.03.2019
(73) Patentinhaber: Hugo Vogelsang Maschinenbau GmbH, 49632 Essen (DE)
(72) Erfinder: ZEIN, Bilal, 49632 Essen Oldb. (DE); HEINRICHS, Martin, 49632 Essen Oldb. (DE)
(74) Vertreter: Eisenführ Speiser
(86) Internationale Anmeldenummer: PCT/EP2017/060081
(87) Internationale Veröffentlichungsnummer: WO 2017/186858

(56) Entgegenhaltungen:
- EP-A1- 1 728 933
- EP-A2- 0 628 900
- US-A- 3 666 103
- US-A- 4 324 007
- US-B1- 6 343 752

## Beschreibung

Die Erfindung betrifft einen Abwassersammeltank gemäß Anspruch 1 für eine eine Sanitäreinrichtung, insbesondere eine mobile Sanitäreinrichtung in einem Kraftfahrzeug wie einem Reisebus, mit einem Abwassersammeltank, der einen Tankboden und eine Tankseitenwand, die einen Tankinnenraum umschließen, einen Einlassanschluss und eine Auslassvorrichtung aufweist. Ein weiterer Aspekt der Erfindung ist ein Verfahren gemäß Anspruch 12 für einen Abwassersammeltank für eine solche Sanitäreinrichtung sowie eine Nachrüstabsaugeinrichtung gemäß Anspruch 10 für einen Abwassersammeltank in einer solchen Sanitäreinrichtung.

Abwassersammeltanks von Sanitäreinrichtungen werden für stationäre Einheiten, wie beispielsweise WC-Einrichtungen für Veranstaltungen oder Baustellen und für mobile Einheiten, wie Sanitäreinrichtungen in Kraftfahrzeugen oder gleisgebundenen Fahrzeugeneingesetzt und dienen dazu, das Abwasser aus Toiletten, Waschbecken oder anderen Sanitäreinrichtungen aufzunehmen und für einen bestimmten Zeitraum zu sammeln. In regelmäßigen Abständen muss ein solcher Abwassersammeltank entleert werden. Diese Entleerung erfolgt oftmals durch Öffnen eines Entleerungsventils und Ablassen des Abwassers durch eine Ablassöffnung in eine entsprechende Auffangvorrichtung, die unterhalb der Ablassöffnung des Abwassersammeltanks angeordnet ist.

Vorteilhaft an dieser Art der Entleerung ist, dass eine praktisch vollständige Entleerung erzielt wird, wodurch eine qualitativ hochwertige Hygiene im Tank erreicht wird, da, kein Restabwasser im Tank verbleibt. Zudem ermöglicht diese Art der Entleerung einen gegenüber Verstopfungen, die aufgrund von Feststoffen wie Papiertüchern oder dergleichen bei Sanitäreinrichtungen stets auftreten können, sehr sicheren Entleerungsvorgang, da ein großer Auslassdurchgang an der Auslassöffnung realisiert werden kann. Ein solcher Auslassdurchgang wird technisch mittels eines Kugeldurchgangsmaßes beschrieben, also dem Durchmesser einer Kugel, die durch den Auslassdurchgang passt. Oftmals sind Kugeldurchgangsmaße von mehr als 30mm oder 40mm vorteilhaft, um den Abfluss aus der Auslassöffnung verstopfungsfrei durchzuführen.

Es ist bekannt, beispielsweise Reisebusse zu diesem Zweck oberhalb von einer fest in den Boden eingelassenen Öffnung zu positionieren, sodass das ablaufende Abwasser in diese Öffnung gelangt. Nachteilig an dieser Vorgehensweise ist, dass manchmal eine ungenaue Platzierung des Reisebusses erfolgt, wodurch die Ablassöffnung nicht exakt oberhalb von der Bodenöffnung zu liegen kommt und hierdurch eine Verunreinigung im Bereich um die Bodenöffnung erfolgt.

Aus DE 20 2015 103 442 ist eine Entsorgungsvorrichtung für den Abwassertank von Reisebussen bekannt, bei der anstelle einer solchen Bodenöffnung eine mobile Aufnahmeeinrichtung eingesetzt wird, die eine verbesserte Platzierung unterhalb der Ablassöffnung des Abwassersammeltanks erlaubt. Hierdurch wird zwar die Positioniergenauigkeit verbessert, allerdings kann es aufgrund der schlechten Einsehbarkeit gleichwohl zu Fehlbedienungen kommen, die Verschmutzungen zur Folge haben. Zudem erfordert die aus DE 20 2015 103 442 U1 vorbekannte Vorrichtung einen Auffangtrichter, der durch das Ablassen des Abwassers verschmutzt und daher eine nachfolgende Reinigung erforderlich macht.

In DE 20 2015 105 495 U1 ist eine weitere Entwicklung zur Entsorgung des Abwassers aus Abwassersammeltanks von Reisebussen offenbart. Hierbei wird mit einer Bodenöffnung, die in spezifischer Weise ausgebildet und durch einen spezifisch ausgeformten Rost abgedeckt ist, eine Aufnahme des Abwassers in eine stationäre Einrichtung vorgeschlagen und verschiedene Hilfsmittel zur exakten Positionierung der Ablassöffnung oberhalb dieser Bodenöffnung beschrieben. Mit der beschriebenen Technologie ist die Positionierung des Reisebusses und der daran installierten Ablassöffnung des Abwassersammeltanks in leichterer Weise möglich. Gleichwohl treten auch bei dieser Funktionsweise der Entleerung des Abwassersammeltanks gelegentlich Verschmutzungen und Geruchsbelästigungen auf.

Aus DE 89 00 672 U1 ist eine Vorrichtung zur Entwässerung von Schmutzwassersammelbehältern in Siedlungen vorbekannt. Diese Vorrichtung ist in besonderer Weise dafür ausgeführt, dass eine luftfreie Absaugung gelingt, wozu ein Absaugrohr in einen Topf geführt ist, der in dem Abwassersammelbehälter schwimmend angeordnet ist. Nachteilig an dieser Ausgestaltung ist, dass der Zulauf des Schmutzwassers aus dem Abwassersammelbehälter in die Absaugeinrichtung in erheblicher Höhe des Tankbodens angeordnet sein muss, um aufgrund der hydraulischen Verhältnisse den Fluss des Abwassers zu gewährleisten. Hierdurch ist eine Absaugung des Abwassers nur bis zu einem bestimmten Pegel oberhalb des Bodens möglich und es verbleibt ein beträchtlicher Anteil an Restabwasser nach Absaugung im Abwassertank. Dies mag zwar für stationäre Anwendungen, in denen große Abwasserbehälter zum Einsatz kommen, funktionell akzeptabel sein, ist jedoch für Anwendungen, in denen der zur Verfügung stehende Platz knapp ist und daher die volle Kapazität des Abwasserbehälters genutzt werden muss, vollkommen unzureichend, denn bei dieser platzsparenden Einsatzweise muss eine möglichst vollständige Absaugung des Abwassertanks ermöglicht sein.

Aus DE 20 2012 003 064 U1 ist eine Abwassereinrichtung für Campingfahrzeuge bekannt, bei der das Abwasser über einen Ablassstutzen abgelassen werden kann. Dieser Ablassstutzen ist in Schwerpunktrichtung vom Boden des Abwassersammeltanks nach unten ausgehend gerichtet und ermöglicht somit eine vollständige Entleerung des Abwassersammeltanks. Nachteilig an dieser Ausgestaltung ist jedoch, dass die Abflussrichtung eine entsprechende Auffangvorrichtung erforderlich macht und das Ablassen des Abwassers insgesamt umständlich und unhygienisch sein kann.

Aus US3666103A ist ein Abwassertank vorbekannt, der eine mit Druckluft beaufschlagte Belüftungseinrichtung aufweist um Luftblasen durch Abfallmaterial in dem Tank zu blubbern.

Aus US4324007 ist ein Schiffsabwassertank mit einer darin eingebauten Pumpe mit Zerkleinerungsfunktion vorbekannt.

Aus US6343752 ist ein Abwassertank mit einer Absaugpumpe vorbekannt, der ein Alarmsystem aufweist, das verschiedene Funktionsstörungen erfasst.

Aus EP0628900A2 ist ein Abwassersammelbecken vorbekannt, aus dem Abwasser unter der Kontrolle eines Vakuumventils über ein Absaugrohr abgesaugt wird.

Aus EP1728933A1 ist ein Abwassersammel- und entsorgungssystem für Sportbootmarinas vorbekannt, bei dem mittels auf einem Bootssteg installierter, aufgespulter Absaugschläuche das Abwasser aus Bootsabwassertanks abgesaugt wird.

Der Erfindung liegt die Aufgabe zugrunde, eine insoweit verbesserte Vorrichtung zur Entleerung von Abwassersammeltanks von Sanitäreinrichtungen, insbesondere in Kraftfahrzeugen vorzuschlagen. Die verbesserte Vorrichtung soll insbesondere geeignet sein, um den spezifischen Anforderungen gerecht zu werden, die bei Fahrzeugen auftreten, die mit einer solchen Sanitäreinrichtung und entsprechend einem Abwassersammeltank ausgerüstet werden. Insbesondere sollen hierbei die Konstruktionsvorgaben und der übliche Fertigungsablauf im Fahrzeugbau besonders berücksichtigt sein, eine effiziente und kostengünstige Installation der Elemente, die für die verbesserte Entsorgungsvorrichtung notwendig sind, ermöglicht werden und ein zuverlässiger Betrieb sichergestellt sein.

Diese Aufgabe wird erfindungsgemäß mit einem Abwassersammeltank nach Anspruch 1 gelöst.

Erfindungsgemäß ist bei der erfindungsgemäßen Auslassvorrichtung ein Absaugkanal vorgesehen, der sich innerhalb des Abwassersammeltanks ausgehend von einer Auslassöffnung nach unten zu einer oder mehreren Ansaugöffnung(en) erstreckt. Die Ansaugöffnung liegt daher im unteren Bereich des Abwassersammeltanks, vorzugsweise nur geringfügig oberhalb der tiefsten Stelle des Abwassersammeltanks, um den Abwassersammeltank möglichst vollständig entleeren zu können. Entgegen der im Stand der Technik benutzten Vorgehensweise, bei der das Abwasser in Schwerkraftrichtung aus dem Abwassersammeltank nach unten abgelassen wird, sieht die Erfindung vor, dass das Abwasser aus dem Abwassersammeltank abgesaugt wird. Zu diesem Zweck ist ein Absaugkanal innerhalb des Abwassersammeltanks angeordnet, der sich ausgehend von der tief angeordneten Ansaugöffnung zu einer Auslassöffnung erstreckt, die oberhalb des Abwassersammeltanks liegen kann. Diese Auslassöffnung weist eine Anschlusskupplung auf, an die eine Absaugeinrichtung angeschlossen werden kann. Dieser Anschluss der Absaugeinrichtung an die Anschlusskupplung ist vorzugsweise gedichtet, sodass ein Unterdruck, den die Absaugeinrichtung erzeugt, in den Absaugkanal eingeleitet werden kann und zum Ansaugen des Abwassers in die Ansaugöffnung führt. Der Absaugkanal verbindet fluiddicht die Auslassöffnung und die daran angeschlossene Absaugeinrichtung mit der Ansaugöffnung.

Mit der Erfindung wird es möglich, ein Kraftfahrzeug wie einen Reisebus mit einem Abwassersammeltank bereitzustellen und auszurüsten und hierbei eine zuverlässige, verschmutzungsfreie Entleerung des Abwassersammeltanks zu bewirken. Hierzu wird eine Absaugeinrichtung eingesetzt, die an einen Absaugkanal angeschlossen wird. Der Absaugkanal verbindet eine für diesen Anschluss vorgesehene Anschlusskupplung fluiddicht mit einer Ansaugöffnung, die im Abwassersammeltank angeordnet ist, vorzugsweise knapp oberhalb einer tiefstgelegenen Stelle des Abwassersammeltanks oder an der tiefstgelegenen Stelle des Abwassersammeltanks. Hierdurch wird eine nahezu vollständige Entleerung des Abwassersammeltanks ohne die Gefahr von Verschmutzungen der Umgebung ermöglicht.

Der erfindungsgemäße Abwassersammeltank eignet sich insbesondere zur Absaugung mittels einer Drehkolbenpumpe, die aufgrund ihrer selbstsaugenden Eigenschaften eine Restentleerung auch bei Luftansaugung erreicht.

Die erfindungsgemäße Ausführung ermöglicht den Einsatz von unterschiedlich gestalteten Abwassersammeltanks. Grundsätzlich kann der Tankboden eines solchen Abwassersammeltanks als ebene Bodenfläche ausgeführt sein, ebenso aber auch als unregelmäßig strukturierte Bodenfläche mit verschiedenen Bodenwandabschnitten auf unterschiedlicher Höhe. Auch die Seitenwand oder Seitenwände können unterschiedlich ausgeführt sein, beispielsweise sind zylindrische Ausgestaltungen mit einer einzigen, als Zylinderwand ausgeführten Seitenwand möglich, ebenso aber auch eckige, abgerundet eckige oder in sonstiger Weise zerklüftete Seitenwandstrukturen. Auch die Oberseite des Abwassersammeltanks kann mit einer planen Fläche oder mehreren planen oder schrägen Flächen ausgeführt sein, in Übereinstimmung mit den geometrischen Freiheiten der Bodenwand des Abwassersammeltanks. Insgesamt ermöglicht die erfindungsgemäße Ausführungsform eine zerklüftete geometrische Struktur des Abwassersammeltanks mit der einzigen Vorgabe, dass eine Installation des Absaugkanals möglich sein muss, der sich durch den Abwassersammeltank zumindest teilweise erstreckt und bevorzugt bis zu der tiefsten Stelle des Abwassersammeltanks reicht.

Es ist dabei besonders bevorzugt, wenn die Ansaugöffnung durch eine obere Kante begrenzt wird, die in einem Abstand zum Tankboden liegt, der kleiner als 10% der Gesamthöhe des Abwassersammeltanks ist. Durch diese Ausführungsform wird es möglich, den Abwassersammeltank zu zumindest 90% zu entleeren, wenn eine im Wesentlichen gleichmäßige Querschnittsgeometrie des Abwassersammeltanks vorherrscht. Insbesondere ist es bevorzugt, wenn die Kante, welche die Ansaugöffnung oben begrenzt, in einem Abstand von weniger als 5% der Gesamthöhe des Abwassersammeltanks oberhalb des Tankbodens liegt. Beispielsweise kann die Kante in einem Abstand von weniger als 5cm oder weniger als 2cm oberhalb des Tankbodens angeordnet sein, bevorzugt in einem Abstand von weniger als 1cm, sodass der Abwassersammeltank nahezu vollständig durch Absaugung entleert werden kann.

Noch weiter ist es bevorzugt, dass die Ansaugöffnung an einer Saugglocke ausgebildet ist, deren Abmessung parallel zu in der Ebene des Tankbodens größer ist als der Querschnitt des Absaugkanals. Unter einer Saugglocke soll hierbei eine gegenüber dem Absaugkanal verbreiterte, insbesondere kuppelartige Struktur verstanden werden, die am unteren Ende des Absaugkanals angeordnet ist und deren horizontale Abmessung größer ist als die horizontale Abmessung des Absaugkanals. An der Saugglocke sind eine oder mehrere Ansaugöffnungen angeordnet, die durch die größeren horizontalen Abmessungen eine günstigere Absaugung des Abwassers und darin enthaltener Feststoffe aus dem Abwassersammeltank ermöglichen. Insbesondere kann durch eine solche Saugglocke eine Sog- und Wirbelbildung erzeugt werden, die ein verstopfungsfreies Absaugen des Abwassers aus dem Abwassersammeltank erreicht. Während es im Stand der Technik oftmals notwendig ist, dass ein Abwassersammeltank in einem Reisebus nur durch eine zweimalige Entleerung, zwischen denen der Abwassertank mit etwas Frischwasser aufgefüllt wird und der Reisebus eine Bewegungsfahrt unternimmt, um den Abwassersammeltank zu durchmischen, vollständig entleert werden kann, kann dies durch eine Absaugung mit einer Saugglocke in der Regel vermieden werden, und es wird eine vollständige Entleerung in einem einzigen Entleerungsvorgang erzielt.

Noch weiter ist es bevorzugt, dass die Saugglocke exzentrisch zu einer Längsachse des Absaugkanals angeordnet ist. Durch eine exzentrische Anordnung der Saugglocke kann einerseits die Montage der Saugglocke mitsamt des Absaugkanals wesentlich erleichtert werden, da das zusammenhängende Bauteil aus Saugglocke und Absaugkanal bei dieser exzentrischen Konstruktionsweise leichter durch eine kleine Öffnung in der Oberseite des Abwassersammeltanks eingeführt werden kann. Insbesondere wird dies erleichtert und ermöglicht, indem die gesamte Einheit zunächst geneigt werden kann, um die Saugglocke einzuführen und dann in einer senkrechten, geraden Bewegung und Ausrichtung der Absaugkanal in den Abwassersammeltank eingeschoben werden kann. Unter einer exzentrischen Anordnung ist hierbei zu verstehen, dass der Mittelpunkt des Volumens der Saugglocke bzw. der Flächenmittelpunkt einer Querschnittsfläche der Saugglocke seitlich versetzt zu der Mittelachse des Absaugkanals angeordnet ist. Sofern Absaugkanal und Saugglocke als im Querschnitt kreisförmige Strukturen ausgeführt sind, liegt folglich die Mittelachse der Saugglocke seitlich versetzt zur Mittelachse des Absaugkanals. Bei anderen Konstruktionsformen, beispielsweise mehreckigen Konstruktionen der Saugglocke und/oder des Absaugkanals ist die exzentrische Lage in Bezug auf die Flächenmittelpunkte der Querschnittsflächen zu verstehen.

Gemäß einer noch weiteren bevorzugten Ausführungsform ist vorgesehen, dass die Saugglocke faltbar ausgebildet ist und aus einem eingefalteten Zustand, in dem sie einen ersten Umfang quer zur Längserstreckung des Absaugkanals aufweist, in einen ausgefalteten Zustand entfaltet werden kann, in dem sie einen zweiten Umfang quer zur Längserstreckung des Absaugkanals aufweist, der größer ist als der erste Umfang. Mit einer solchen faltbaren Ausgestaltung wird die Montage der Saugglocke innerhalb des Abwassersammeltanks noch weiter erleichtert. Unter einer Faltbarkeit der Saugglocke ist hierbei zu verstehen, dass die Saugglocke aus einem eingefalteten Zustand mit kompakten äußeren Abmessungen in einen ausgefalteten Zustand mit demgegenüber größeren äußeren Abmessungen entfaltet werden kann. Grundsätzlich muss dieser Entfaltungsvorgang lediglich einmal möglich sein und gegebenenfalls die Saugglocke in der entfalteten Position auch einrasten, um diese entfaltete Position für die Betriebsdauer sicherzustellen. Die Entfaltung kann hierbei mittels elastischer Verformung der Saugglocke realisiert sein oder durch eine mechanische Konstruktion, beispielsweise nach Art eines Scherengitters, einer Gestängekonstruktion, die von Regenschirmen bekannt ist, erfolgen, also mittels verschiedener, durch Gelenke miteinander verbundener Hebel. Alternativ oder zusätzlich können Formgedächtnismetalle die Konstruktion der Saugglocke stabilisieren und aus einem eingefalteten Zustand in einen ausgefalteten Zustand umklappen. Unter einer Entfaltung der Saugglocke aus einem eingefalteten in einen ausgefalteten Zustand soll auch erfindungsgemäß eine Ausführungsform verstanden werden, bei der die Saugglocke durch Aufpumpen eines mechanisch stabilisierenden Gerüstes mit einem unter Druck stehenden Medium, beispielsweise Flüssigkeit oder Luft, entfaltet wird, insbesondere kann die Entfaltung durch Aufpumpen eines Stabilisierungsgerüstes der Saugglocke bewirkt werden.

Noch weiter ist es bevorzugt, dass die Anschlusskupplung oberhalb eines abgewinkelten Abschnitts des Absaugkanals angeordnet ist, wobei vorzugsweise der abgewinkelte Abschnitt ausgehend von einer Durchtrittsrichtung im Bereich der Anschlusskupplung von 0° bis 75°, insbesondere 45° zur Horizontalen zu einer Durchtrittsrichtung von 75° bis 105°, vorzugsweise 90° zur Horizontalen im Bereich des Absaugkanals abgewinkelt ist. Grundsätzlich kann die Erfindung umgesetzt werden, indem sich der Absaugkanal im Wesentlichen senkrecht innerhalb des Abwassersammeltanks erstreckt und im oberen Bereich, insbesondere in einem Bereich des Absaugkanals, der sich außerhalb des Abwassersammeltanks erstreckt, geradlinig verläuft und den Anschluss einer Absaugeinrichtung an die Anschlusskupplung in senkrechter Anschlussweise ermöglicht. Für bestimmte Einbaulagen kann es jedoch vorteilhaft sein, wenn die Anschlusskupplung nicht horizontal liegt, also die Auslassöffnung nicht eine horizontal liegende Querschnittsfläche aufweist, sondern stattdessen die Querschnittsfläche der Auslassöffnung und folglich der Anschlusskupplung zur Horizontalen geneigt ist. Diese Neigung kann je nach Einbausituation des Abwassersammeltanks und des Absaugkanals unterschiedlich ausfallen, insbesondere ist es für viele Einbausituationen und viele Anschlusssituationen vorteilhaft, wenn die Anschlusskupplung in einem Winkel von 45° liegt, folglich also die Querschnittsfläche der Auslassöffnung im Bereich der Anschlusskupplung um 45° geneigt zur Horizontalen ist. Dies ermöglicht einerseits eine sichere, verschmutzungsfreie Anschlussweise der Absaugeinrichtung und zudem bei Abkoppeln der Absaugeinrichtung einen verschmutzungsfreien Rücklauf von Restabwasser in den Abwassersammeltank.

Noch weiter ist des bevorzugt, wenn die Anschlusskupplung eine Bajonettkupplung oder eine Schraubkupplung ist. Dabei kann die Anschlusskupplung in bekannter Weise mittels einer Überwurfmutter verriegelt werden, welche an der Anschlusskupplung angeordnet ist und mit einem entsprechenden Außengewinde am Anschlussschlauch der Absaugeinrichtung zusammenwirkt oder umgekehrt. Besonders bevorzugt ist es jedoch, eine Bajonettkupplung vorzusehen, die mittels einer Drehbewegung über einen kleinen Winkelbereich, einer Schiebebewegung oder einer kombinierten Dreh-Schiebebewegung eine sichere Arretierung der Verbindung zwischen einem Absaugschlauch der Absaugeinrichtung und der Anschlusskupplung ermöglicht. Beispielsweise kann eine als Kamlock bekannte Kupplung für diese Ausgestaltung zum Einsatz kommen.

Besonders bevorzugt ist es weiterhin, dass die Anschlusskupplung als Kupplungsmutterteil ausgebildet ist und folglich zur Kopplung mit einem Kupplungsvaterteil ausgebildet ist, das an einem Absaugschlauch oder Absaugrohr einer Absaugeinrichtung vorhanden ist. Hierdurch wird eine weitestgehend tropffreie Ankopplung und Abkopplung erreicht, da Abwasserreste, die im Verlaufe der An- oder Abkopplung aus dem nach unten geneigten Kupplungsvaterteil abtropfen, im Kupplungsmutterteil aufgefangen werden und dadurch zurück in den Abwassersammeltank laufen können.

Noch weiter ist es bevorzugt, dass der erfindungsgemäße Reisebus dadurch fortgebildet wird, dass die eine oder mehrere Ansaugöffnung durch Ausnehmungen gebildet werden, deren Durchtrittsquerschnitt durch den Tankboden des Abwassersammeltanks und einen Ansaugöffnungsrand begrenzt werden, wobei der Ansaugöffnungsrand mit einer beweglichen Unterdruckwirkfläche verbunden ist und mittels einer Vorspannung in einer abgesenkten ersten Stellung gehalten ist, so dass die Ansaugöffnung
- in der ersten Stellung, in der ein erster Saugunterdruck im Absaugkanal auf die Unterdruckwirkfläche einwirkt, in einem ersten Abstand zum Tankboden angeordnet ist, und
- in einer zweiten Stellung, in der ein zweiter Saugunterdruck im Absaugkanal auf die Unterdruckwirkfläche einwirkt, der höher ist als der erste Saugunterdruck, in einem zweiten Abstand zum Tankboden angeordnet ist, der größer ist als der erste Abstand, indem der auf die Unterdruckwirkfläche wirkende zweite Saugunterdruck eine gegen die Vorspannung wirkende Hebekraft auf den Ansaugöffnungsrand ausübt und durch Anheben des Ansaugöffnungsrands eine Vergrößerung des Durchtrittsquerschnitts der Ansaugöffnung bewirkt.

Ein generelles Problem beim Absaugen von Abwasser aus einem Abwassersammeltank besteht darin, dass einerseits der Abwassersammeltank möglichst vollständig geleert werden soll, andererseits Verstopfungen des Abwasserabsaugsystems verhindert werden sollen. Zur vollständigen Entleerung ist es notwendig, die Absaugöffnung klein zu gestalten möglichst nahe zur tiefsten Stelle, also typischerweise zum Tankboden des Abwassersammeltanks anzuordnen. Eine solche Anordnung führt jedoch regelmäßig zu einer Verengung der Ansaugöffnung, also einem nur kleinen Querschnitt der Ansaugöffnung, der leicht verstopft.

Erfindungsgemäß ist daher gemäß dieser Ausführungsform vorgesehen, dass die Ansaugöffnung durch einen Ansaugöffnungsrand und durch den Tankboden begrenzt werden. Der Ansaugöffnungsrand begrenzt die Ansaugöffnung dabei oben und vorzugsweise auch seitlich, wohingegen der Tankboden die Ansaugöffnung unten begrenzt. Es kann dabei eine Ansaugöffnung vorgesehen sein, ebenso aber auch mehrere Ansaugöffnungen, die dann durch jeweils eigene Ansaugöffnungsränder begrenzt werden.

Der Ansaugöffnungsrand kann beispielsweise an einer Saugglocke, wie einer zuvor beschriebenen Saugglocke, oder direkt am Absaugkanal oder einem daran unten befestigten Bauteil ausgebildet sein. Die Ansaugöffnung ist in einer vorgespannten Lage knapp oberhalb des Bodens des Abwassersammeltanks angeordnet und ermöglicht hierdurch eine praktisch vollständige Entleerung des Abwassersammeltanks, da erst bei einem niedrigen sehr Füllstand Luft angesaugt wird und der Absaugunterdruck erst dann zusammenbricht. Führt jedoch ein Festkörper dazu, dass diese Ansaugöffnung oder die Ansaugöffnungen verstopft/verstopfen, so steigt infolge dieser Verstopfung der Unterdruck im Absaugkanal. Die Ansaugöffnung ist mit einer Unterdruckwirkfläche gekoppelt, auf die dieser Unterdruck einwirkt. Diese Einwirkung eines erhöhten Unterdrucks wirkt gegen die Vorspannung, welche den Ansaugöffnungsrand in der abgesenkten Position vorgespannt hält und hebt diese Vorspannung teilweise oder vollständig auf. Die Einwirkung des erhöhten Unterdrucks führt daher zu einer Anhebung des Ansaugöffnungsrands und folglich einer Vergrößerung des Durchlassquerschnitts der Ansaugöffnung. Durch diese Vergrößerung kann sich die Verstopfung auflösen bzw. auch ein größerer Fremdkörper in den Absaugkanal eingesaugt werden und daher aus dem Abwassersammeltank entfernt werden. Sobald die Verstopfung aufgehoben ist, fällt der Absaugunterdruck im Absaugkanal wieder auf ein geringeres Level zurück, und der Ansaugöffnungsrand senkt sich wieder in die ursprüngliche Position ab, in der der Abwassersammeltank nahezu vollständig entleert werden kann.

Es ist zu verstehen, dass die Vergrößerung des Durchlassquerschnitts der Ansaugöffnung(en) ein Effekt ist, jedoch nicht zwangsläufig der einzige Effekt ist, sondern zusätzlich oder auch alternativ eine andere Funktion auftritt. Sofern der Ansaugöffnungsrand sich anhebt, kann auch bereits durch die dadurch erzeugte Bewegung eine Verstopfung aufgelöst werden, selbst dann, wenn die Anhebung keine oder keine signifikante Vergrö-βerung des Querschnitts der Ansaugöffnungen bewirkt. Auch kann, insbesondere wenn letzte Reste aus dem Abwassersammeltank abgesaugt werden, das Anheben dazu führen, dass Luft angesaugt wird, was einen sofortigen Zusammenbruch oder eine maßgebliche Reduktion des Absaugunterdrucks zur Folge hat und folglich den Ansaugöffnungsrand wieder mit schneller Bewegung in die abgesenkte Lage zurückkehren lässt. Dies kann eine mehrmalige Auf-und-ab-Bewegung des Ansaugöffnungsrandes zur Folge haben, die ebenfalls hilfreich ist, um Verstopfungen zu lösen.

Besonders bevorzugt ist es dabei, dass der Ansaugöffnungsrand in Absaugrichtung, also in Durchtrittsrichtung des Abwassers durch die Ansaugöffnungen wegklappt und hierdurch angehoben wird. Dabei kann bevorzugt der Ansaugöffnungsrand in einem solchen Absatnd zum Absaugkanal angeordnet sein, dass der Durchtrittsquerschnitt im Absaugkanal nicht eingeschränkt wird, wenn der Ansaugöffnungsrand einwärts klappt.

Insbesondere ist es bevorzugt, dass ein Kugeldurchgangsmaß von zumindest als 30mm, vorzugsweise zumindest 40mm durch das Anheben des Ansaugöffnungsrandes erzeugt wird und ein solches Kugeldurchgangsmaß auch im Absaugkanal erhalten bleibt.

Noch weiter ist es bevorzugt, wenn der Ansaugöffnungsrand bei reversierter Strömung, also bei Befüllung des Abwassersammeltanks durch den Absaugkanal und Ausströmung durch die Ansaugöffnung, sich ebenfalls bewegt, inbesondere absenkt oder auswärts klappt und hierdurch sich der Querschnitt der Ansaugöffnung verringert und/oder deren Ausströmungsrichtung verändert. Dies dient dazu, einen wirksamen scharfen Reinigungsstrahl zu erzeugen, der aus dem Absaugkanal durch die Ansaugöffnungen in den Abwassersammeltank austritt und hierdurch eine Auflösung von Verstopfungen und Lösung von am Tankboden abgesetzten Feststoffen bewirkt. So kann beispielsweise der Absaugvorgang so ausgeführt werden, dass intermittierend, beispielsweise zeitlich regelmäßig oder insbesondere bei Auftreten von Verstopfungen, die Strömung für einen kurzen Zeitraum reversiert wird.

Schließlich kann die Ausführungsform dazu genutzt werden, um unterschiedliche Absaugweisen zu realisieren, beispielsweise kann mit hohem Unterdruck abgesaugt werden, was dazu führt, dass der Ansaugöffnungsrand sich anhebt und hierdurch auch ein hoher Durchtrittsquerschnitt durch die Ansaugöffnung(en) bereitgestellt werden kann bzw. das Nachfließen von Flüssigkeit aus dem Abwassersammeltank erleichtert wird, sodass die Gefahr einer Luftansaugung durch die Ansaugöffnungen verringert wird. Wird hingegen bei niedrigerem Absaugunterdruck gearbeitet, so bleibt der Ansaugöffnungsrand in der abgesenkten Position, und es wird eine günstige Verwirbelung in Bodennähe des Abwassersammeltanks erreicht, was eine vollständige Absaugung eines Bodensatzes aus dem Abwassersammeltank ermöglicht.

Besonders bevorzugt ist es, wenn der Ansaugöffnungsrand und die Unterdruckwirkfläche einstückig mit dem Absaugkanal verbunden sind und durch elastische Eigenschaften die Anhebung des Ansaugöffnungsrandes bewirkt wird. Der Ansaugöffnungsrand und die Unterdruckwirkfläche können bevorzugt aus einem Elastomer, wie beispielsweise einem Polyurethan (PU, insbesondere thermoplastischer PU, TPU) oder einem Nitril-Butadien Kautschuk (NBR) ausgebildet sein. Bevorzugt sind der Absaugkanal, der Ansaugöffnungsrand und die Unterdruckwirkfläche aus einem übereinstimmenden Material ausgebildet und die Wandstärke des Absaugkanals durch vollständige oder teilweise Wandstärkendimensionierung (Verrippung) ist so ausgeführt, dass der erhöhte Absaugunterdruck, der zum Anheben des Ansaugöffnungsrandes führt, keine Einschnürung des Absaugkanals bewirkt. Alternativ zu einer solchen Wandstärkendimensionierung bei gleichartigem Material können auch Absaugkanal und Ansaugöffnungsrand und die Unterdruckwirkfläche aus unterschiedlichen Materialien ausgebildet sein, beispielsweise mittels eines Coextrusionsherstellungsverfahrens.

Grundsätzlich ist im Sinne dieser Beschreibung und der Ansprüche unter einem hohen Unterdruck ein starkes Vakuum bzw. ein starker Unterdruck zu verstehen und unter einem demgegenüber niedrigeren Unterdruck ein niedrigeres oder schwächeres Vakuum zu verstehen.

Schließlich ist gemäß einer weiteren bevorzugten Ausführungsform vorgesehen, dass der die Ansaugöffnung begrenzende Ansaugöffnungsrand und die Unterdruckwirkfläche einstückig an der Saugglocke ausgebildet sind. Diese Ausführungsform ermöglicht in besonders günstiger Weise eine robuste Herstellung und Umsetzung der funktionell angestrebten Vergrößerung der Querschnitte der Ansaugöffnungen bzw. einer einzigen Ansaugöffnung, um hierdurch eine Verstopfung durch Anhebung des Ansaugöffnungsrands leicht lösen zu können. Die Ansaugöffnung kann zu diesem Zweck beispielsweise als untere Ausnehmung in einer Seitenwand der Saugglocke ausgestaltet sein, so dass sich folglich an der Unterseite ein kurzer Kanal in der Seitenwand ausbildet, der also eine radiale Öffnung definiert, deren Durchtrittsquerschnitt durch Anheben der Platte vergrößert wird.

Gemäß einer hierzu alternativen Ausgestaltung kann die eine oder mehrere Ansaugöffnung durch Ausnehmungen in einer Platte gebildet werden, die beweglich an einer Membran befestigt und mittels einer Vorspannung so gehalten ist, dass die Platte in einer ersten Stellung, in der ein erster Saugunterdruck im Absaugkanal herrscht, in einem ersten Abstand zum Tankboden angeordnet ist, und in einer zweiten Stellung, in der ein zweiter Saugunterdruck im Absaugkanal herrscht, der höher ist als der erste Saugunterdruck, in einem zweiten Abstand zum Tankboden angeordnet ist, der größer ist als der erste Abstand, indem der auf die Membran wirkende zweite Saugunterdruck eine gegen die Vorspannung wirkende Hebekraft auf die Platte ausübt.

Ein weiterer Aspekt der Erfindung ist eine Sanitäreinrichtung mit einem Abwassersammeltank für ein Kraftfahrzeug, insbesondere einen Reisebus, nach Anspruch 9.

Dabei ist zu verstehen, dass der Abwassersammeltank dieser Sanitäreinrichtung insbesondere in gleicher Weise fortgebildet werden kann, wie dies zuvor für den entsprechenden Abwassersammeltank beschrieben wurde. Bezüglich der hiermit erreichten Vorteile, Funktionen und Ausgestaltungsvarianten wird auf die voranstehende Beschreibung Bezug genommen.

Ein noch weiterer Aspekt der Erfindung ist eine Nachrüstabsaugeinrichtung nach Anspruch 10 für einen Abwassersammeltank einer Sanitäreinrichtung. Eine solche Nachrüstabsaugeinrichtung eignet sich dazu, um in bereits fertig montierte Abwassersammeltanks in Kraftfahrzeugen wie Reisebussen eine Vorrichtung einzubauen, die ein Absaugen des Abwassers ermöglicht. Dabei ist zu verstehen, dass die Nachrüstabsaugeinrichtung permanent im bzw. am Abwassersammeltank des Reisebusses verbaut wird und im Falle des notwendigen Absaugens des Abwassers mit einer entsprechenden Absaugeinrichtung verbunden wird und dann die entsprechende Führung des Abwassers aus dem Abwassersammeltank zu der Absaugeinrichtung bereitstellt. Die Nachrüstabsaugeinrichtung kann ebenso wie der zuvor beschriebene Abwassersammeltank fortgebildet werden, wie dies für den entsprechenden Abwassersammeltank zuvor erläutert wurde. Hinsichtlich der diesbezüglichen Funktionen, Vorteile und Variationsmöglichkeiten wird wiederum Bezug auf die voranstehende Beschreibung genommen.

Schließlich ist noch ein weiterer Aspekt der Erfindung ein Verfahren zum Leeren eines Abwassersammeltanks einer Sanitäreinrichtungnach Anspruch 12.

Das Verfahren kann fortgebildet werden, indem die Ansaugöffnung in einem Abstand zum Tankboden angeordnet wird, der kleiner als 10 % der Gesamthöhe des Abwassersammeltanks ist und insbesondere in dieser Höhe fest installiert wird.

Das Verfahren kann noch weiter fortgebildet werden, indem die eine Ansaugöffnung oder mehrere Ansaugöffnungen durch den Tankboden und einen Ansaugöffnungsrand begrenzt wird, der mit einer Unterdruckwirkfläche verbunden ist, auf die ein Saugunterdruck im Absaugkanal wirkt, sodass der Ansaugöffnungsrand bei einem ersten Saugunterdruck im Absaugkanal mittels einer Vorspannung in einer ersten Stellung gehalten wird, in der der Ansaugöffnungsrand in einem ersten Abstand zum Tankboden angeordnet ist, und die Unterdruckwirkfläche bei einem zweiten Saugunterdruck im Absaugkanal, der höher ist als der erste Saugunterdruck, eine gegen die Vorspannung wirkende Hebekraft auf den Ausgangsöffnungsrand ausübt, sodass der Ansaugöffnungsrand bei dem zweiten Saugunterdruck in eine zweite Stellung bewegt wird, in der der Ansaugöffnungsrand in einem zweiten Abstand zum Tankboden angeordnet ist, der größer ist als der erste Abstand.

Das Verfahren kann noch weiter fortgebildet werden, indem der Ansaugöffnungsrand aus der ersten in die zweite Stellung angehoben wird, indem sich ein Teil einer die Saugglocke begrenzenden Wand verformt. In Bezug auf die Funktionen, Vorteile und Variationsmöglichkeiten des so beschriebenen Verfahrens wird Bezug genommen auf die hierzu korrespondierenden Merkmale des zuvor beschriebenen Reisebusses bzw. Kraftfahrzeugs.

Schließlich ist es weiter bevorzugt, dass der Absaugvorgang bei Auftreten einer Verstopfung oder in zeitlich regelmäßigen Abständen reversiert wird, hierbei Flüssigkeit, insbesondere Abwasser, aus den Ansaugöffnungen in den Abwassersammeltank eingeleitet wird, und sich der Ansaugöffnungsrand bei dieser reversierten Strömung bewegt, insbesondere absenkt und dadurch den Durchgangsquerschnitt der Ansaugöffnungen verringert.

Bevorzugte Ausführungsformen der Erfindung werden anhand der Figuren erläutert. Es zeigen:
- Figur 1: eine erste Ausführungsform der Erfindung als Teildarstellung eines Abwassersammeltanks mit eingebautem Absauganschluss in teilgeschnittener Seitenansicht,
- Figur 1a: eine Draufsicht auf die Ausführungsform der Figur 1,
- Figur 2: eine perspektivische Ansicht der Ausführungsform gemäß Figur 1,
- Figur 3: eine perspektivische Explosionsdarstellung der Ausführungsform gemäß Figur 1,
- Figur 4: eine Ansicht gemäß Figur 1 der Ausführungsform gemäß Figur 1 mit gedrehtem Anschlussstutzen,
- Figur 4a: eine Draufsicht auf die Ausführungsform gemäß Figur 2,
- Figur 5: eine zweite Ausführungsform der Erfindung in einer Ansicht gemäß Figur 1,
- Figur 5a: eine Draufsicht auf die Ausführungsform gemäß Figur 5
- Figur 6: eine dritte Ausführungsform der Erfindung in einer Ansicht gemäß Figur 1,
- Figur 6a: eine Draufsicht auf die Ausführungsform gemäß Figur 6,
- Figur 7: eine vierte Ausführungsform der Erfindung in einer Ansicht gemäß Figur 1 und
- Figur 7a: eine Draufsicht auf die Ausführungsform gemäß Figur 7.

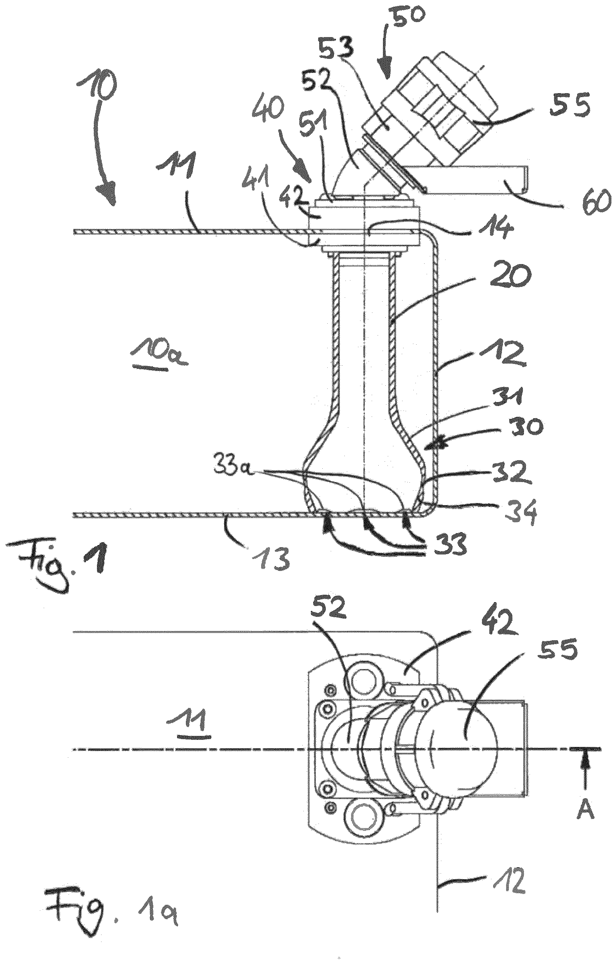

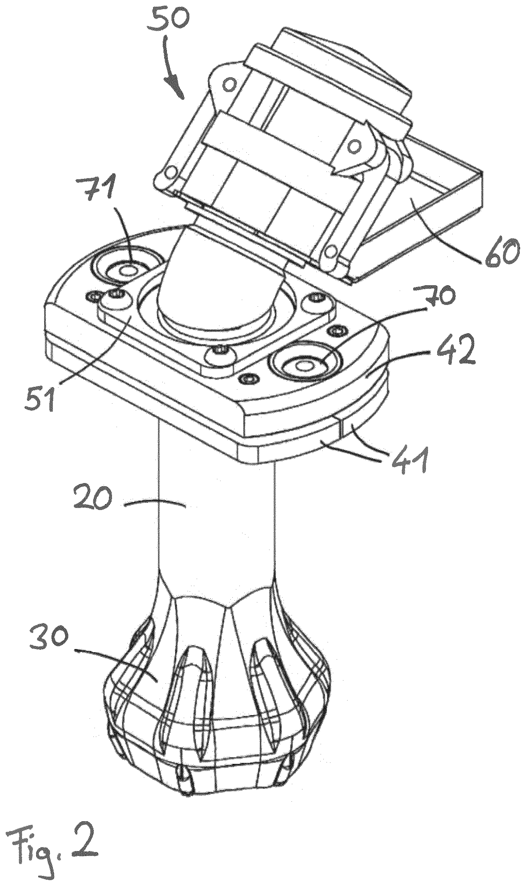

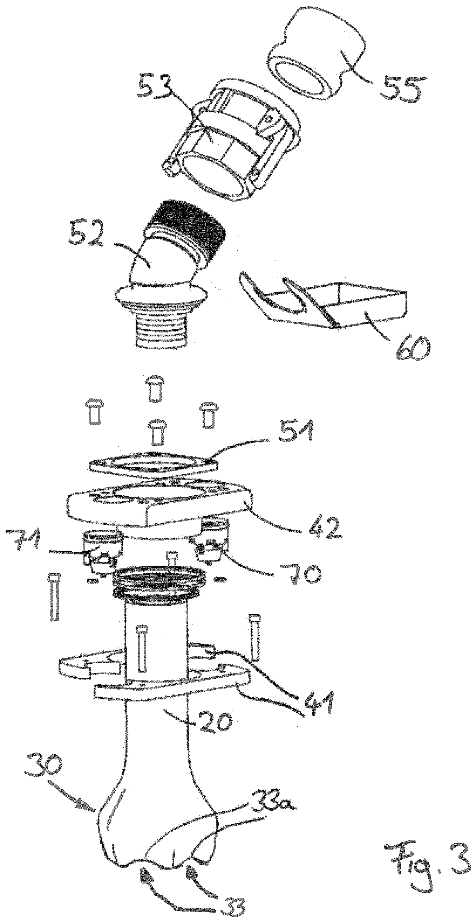

Bezugnehmend zunächst auf die Figuren 1-3 ist ein Abwassersammeltank 10 gezeigt, der einen Tankinnenraum 10a umfasst, der oberseitig durch eine Oberwand 11, seitlich durch eine Seitenwand 12 und bodenseitig durch eine Tankboden 13 begrenzt wird. Der Abwassersammeltank 10 ist mit verrundeten Kanten ausgeführt. Unmittelbar im Randbereich der Oberwand 11 ist eine Öffnung 14 in der Oberwand 11 ausgeführt, durch die ein fest installierter Absaugkanal 20 eingeführt werden und im Bereich um die Öffnung 14 befestigt werden kann.

Der Absaugkanal 20 erstreckt sich von der Oberwand 11 vertikal nach unten zu einer Saugglocke 30. Der Absaugkanal 20 ist hierbei bevorzugt erfindungsgemäß so vorgesehen, dass er an seinem oberen Ende auf ein passendes Maß abgelängt werden kann, um für Abwassersammeltanks mit unterschiedlicher Bauhöhe eingesetzt werden zu können. Dazu geht der Monteur funktional so vor, dass er den Absaugkanal 20 mitsamt Saugglocke 30 in den Abwassersammeltank einführt und auf dem Tankboden 13 aufsetzt. Der vorkonfektionierte Absaugkanal 20 ist hierbei so lang, dass er durch die Öffnung 14 nach oben aus dem Abwassersammeltank herausragt und dann bündig mit der Oberwand 11 zugeschnitten werden kann. Dieser bündige Zuschnitt kann dann moniert werden, wie nachfolgend näher erläutert.

Das Saugrohr 20 und die Saugglocke 30 sind einstückig ausgeführt und können bevorzugt aus einem einheitlichen Material oder einem einheitlichen Materialverbund ausgeführt sein. Grundsätzlich ist es jedoch auch möglich, bestimmte Abschnitte von Saugglocke und/oder Absaugkanal aus einem anderen Material auszubilden und diesen Verbund einstückig, d.h. in sich stoffschlüssig auszuführen, beispielsweise durch Koextrusion, Anspritzen oder Verkleben.

Die Saugglocke 30 weist einen sich vorzugsweise konisch nach unten erweiternden Wandabschnitt 31 auf, der sich ausgehend von dem Absaugkanal 20 nach unten zu einem größeren Querschnitt der Saugglocke erweitert und hierdurch einen größere Querschnittsfläche im Bereich der Saugglocke 30 gegenüber dem Absaugkanal 20 erzeugt. An diesem sich konisch erweiternden Wandabschnitt 31 schließt sich nach unten ein etwa senkrecht stehender Faltungswandabschnitt 32 an, der gegenüber dem Wandabschnitt 31 eine reduziert Wandstärke aufweist. Unterhalb dieses Faltwandabschnitts 32 schließt sich wiederum ein leicht einwärts konisch zulaufender Wandabschnitt 34 an, der sich bis zum Tankboden 13 des Abwassersammeltanks 10 erstreckt. Dieser untere Wandabschnitt 34 weist mehrere Ausnehmungen 33 auf, sodass der Wandabschnitt 34 nur mit einigen Stützabschnitten 35 auf der Bodenwand 13 aufsteht und durch die Ausnehmungen 33 Abwasser aus dem Innenraum 10a in die Saugglocke eingesaugt werden können. Die Ansaugöffnungen werden am oberen Rand durch Ansaugöffnungsränder 33a begrenzt, die in einem kurzen Abstand zum Tankboden 13 liegen. Hierdurch wird erreicht, dass sehr bodennah Abwasser angesaugt wird, was zu einer günstigen Wirbelbildung in Bodennähe beim Absaugvorgang führt und hierdurch auf der Bodenwand 13 abgelagerte Sedimente und Feststoffe aufmischt und einsaugt.

Der Faltwandabschnitt 32 wirkt wie ein Filmscharnier. Bei normalen Absaugdruckverhältnissen, d.h. wenn durch die Ausnehmungen 33 Abwasser in die Saugglocke eingesaugt wird, erfolgt dieser Absaugvorgang in der in Figur 1 dargestellten Konfiguration der Saugglocke. Werden eine oder mehrere der Ausnehmungen 33 durch Feststoffe, beispielsweise Papierhandtücher verstopft, so führt dies zu einem Anstieg des Saugdrucks im Innenraum der Saugglocke 30. Dieser Anstieg bewirkt eine nach einwärts gerichtete Kraft auf den unteren Wandabschnitt 34, sodass dieser im Bereich des Faltwandabschnitts 32 nach innen einklappen kann. Durch diese Einklappwirkung werden die Ansaugöffnungsränder relativ zur Bodenwand 13 angehoben und es entsteht kurzzeitig ein größerer Durchlassquerschnitt durch die Ausnehmungen 33, durch den solche Feststoffe in die Saugglocke eingesaugt werden können. Hierdurch wird die Verstopfungswirkung aufgehoben, der Saugdruck fällt wieder auf normale Werte ab und die Saugglocke geht durch elastische Rückstellungskräfte innerhalb des Materials der Wandabschnitte 31, 32 und 34 in die in Figur 1 gezeigte Konfiguration zurück.

Am oberen Ende des Saugkanals 20 ist ein Montageflansch 40 vorhanden, mit dem der Saugkanal 20 an der Oberwand 11 befestigt wird. Der Befestigungsflansch 40 umfasst eine untere Befestigungsflanschplatte 41 und eine obere Befestigungsflanschplatte 42, zwischen denen ein Wandbereich rund um die Öffnung 14 eingeklemmt werden kann. Das Saugrohr 20 ist an der unteren Befestigungsflanschplatte 41 starr befestigt und hierdurch in der Figur 1 gezeigten Ausrichtung innerhalb des Abwassersammeltanks 10 fest montiert.

Auf der oberen Befestigungsflanschplatte 42 ist eine Anschlussflanschplatte 51 befestigt, die ein um 45° abgewinkeltes Anschlussrohr 52 drehbar aufnimmt. Das Anschlussrohr 52 ist um eine vertikale Achse drehbar befestigt, sodass eine sich an dieses Anschlussrohr 52 anschließender Anschlusskupplung 50 um die vertikale Achse verschwenkt werden kann, damit hierdurch eine einfache und gut zugängliche Anschlussweise eines Absaugschlauchs möglich wird.

Die Anschlusskupplung 50 umfasst einen Anschlussflansch 53, an dem eine Auffangtasse 60 abnehmbar befestigt ist, in der Abwasser, das beim An- oder Abkuppeln abtropft, aufgefangen werden kann.

Der Anschlussflansch 53 ist mittels einer Verschlusskappe 55 verschlossen. Die Verschlusskappe 55 ist durch ein Camlock-System an dem Anschlussflansch 53 befestigt. Sobald ein Absaugvorgang durchgeführt werden soll, wird diese Camlock-Verriegelung gelöst, die Verschlusskappe 55 abgenommen und ein Absaugschlauch oder Absaugrohr mittels einer entsprechenden Camlock-Verbindung mit dem Anschlussflansch 53 fluiddicht gekoppelt.

Die erfindungsgemäße Absaugvorrichtung weist weiterhin ein oder mehrere Rückschlagventile auf, welche den Tankinnenraum mit der Umgebung verbinden. Diese Rückschlagventile sind ausgebildet, um bei Überschreiten eines vorbestimmten Unterdrucks zu öffnen und hierdurch einen Druckausgleich zwischen der Umgebung und dem Tankinnenraum zu bewirken. Diese Rückschlagventile dienen dazu, den Aufbau eines zu hohen Unterdrucks im Zuge eines Absaugvorgangs im Abwassersammeltank zu verhindern, um dadurch eine Verformung oder Beschädigung des Abwassersammeltanks zu vermeiden. Bei der in den Figuren 1-3 dargestellten Ausführungsform sind zwei Rückschlagventile 70, 71 in die obere Befestigungsflanschplatte 42 eingesetzt und erstrecken sich durch die obere und die untere Befestigungsflanschplatte 42, 41, um hierdurch eine Verbindung zwischen Umgebung und Tankinnenraum zu bewirken.

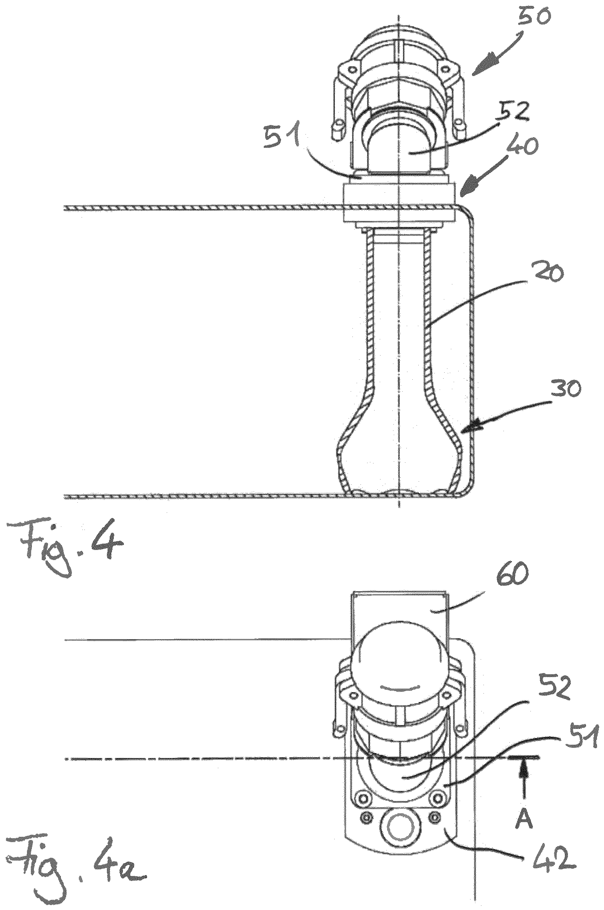

Figuren 4 und 4a zeigen eine geschnittene Seitenansicht und eine Draufsicht auf die Ausführungsform gemäß Figur 1 mit einer gegenüber der dort gezeigten Ausrichtung verdrehten Anschlusskupplung 50. Wie dargestellt, ist die Anschlusskupplung durch Verdrehung des abgewinkelten Anschlussrohres 52 gegenüber der Anschlussflanschplatte 51 um 90° um die Hochachse verdreht und ermöglicht hierdurch eine Montage eines Absaugschlauchs oder Absaugrohres aus einer anderen Richtung. Es ist zu verstehen, dass diese Verschwenkbarkeit der Anschlusskupplung 50 auch für sämtliche nachfolgend erläuterten Ausführungsformen umsetzbar ist und die dort eingesetzten Anschlussflanschplatten und abgewinkelten Verbindungsrohr in gleicher Weise zueinander verschwenkbar sind.

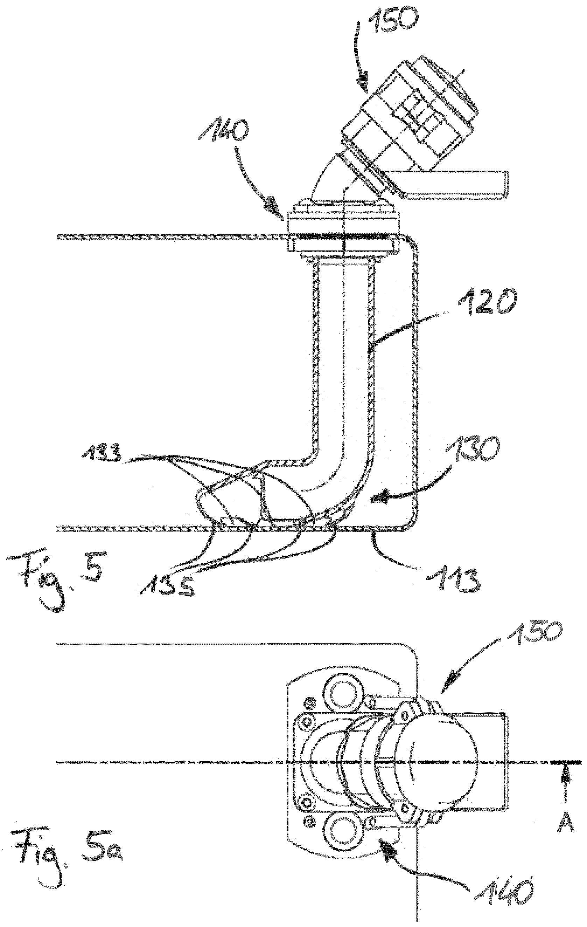

Figuren 5 und 5a zeigen eine zweite Ausführungsform der Erfindung. Bei dieser Ausführungsform ist der gesamte obere Teil inklusive der außerhalb des Tanks gelegenen Anschlusskupplung 150, der Anschlussweise an den Tank mittels eines Anschlussflansches 140 baugleich mit der zuvor hierzu erläuterten Anschlusskupplung 50 und Flanschanschluss 40 der ersten Ausführungsform.

Auch bei der zweiten Ausführungsform erstreckt sich ausgehend von einer unteren Flanschanschlussplatte 141 ein Saugrohr 120 innerhalb des Abwassersammeltanks nach unten und ist einstückig mit einer Saugglocke 130 ausgebildet.

Die Saugglocke 130 sitzt ebenso auf dem Boden auf, ist jedoch im Gegensatz zu der Saugglocke 30 der ersten Ausführungsform, die konzentrisch und rotationssymmetrisch zum Saugrohr 20 ausgeführt ist, exzentrisch und rotationsunsymmetrisch ausgeführt. Die Saugglocke 130 schließt stattdessen bündig mit einem Seitenwandabschnitt des Saugrohrs 120 ab und erstreckt sich in horizontaler Richtung nur über ca. 270° in solcher Weise, dass sie im Querschnitt den Saugrohrquerschnitt übersteigt. Die Saugglocke 130 kann halbkreisförmig oder kreisförmig im Querschnitt ausgeführt sein, ebenso sind andere Geometrien mit Mischformen hieraus oder eckigen Ausgestaltungen möglich.

Die Saugglocke 130 liegt ebenso auf der Bodenwand 113 auf und wird hier durch mehrere Standfüße 135 aufgestellt gehalten. Die Standfüße 135 begrenzen Absaugöffnungen 133, die zwischen diesen Standfüßen jeweils ausgebildet sind und durch die Wände der Standfüße 135 begrenzt werden. Die Standfüße 135 selbst sind elastisch verformbar und weisen einen nach innen zur Saugglocke 130 weisenden Wandabschnitt auf, auf den der in der Saugglocke 130 wirkende Unterdruck einwirkt. Steigt dieser Saugunterdruck in Folge einer Verstopfung der Ansaugöffnungen 133 an, so klappen diese Standfüße 135 einwärts und vergrößern hierdurch den Durchlassquerschnitt der Ansaugöffnungen 133. Hierdurch kann auch ein Feststoff wiederum in die Saugglocke eingesaugt werden, der durch Verstopfung die Saugunterdruckerhöhung verursacht hat. Nach Einsaugen und dem entsprechenden Abfall des Saugunterdrucks klappen die Standfüße 135 wieder in die elastisch vorgespannte Position, die in Figur 5 gezeigt ist, sodass wiederum eine bodennahe Absaugung des Abwassers mit entsprechender Verwirbelung im bodennahen Bereich und Reinigungswirkung durchgeführt werden kann.

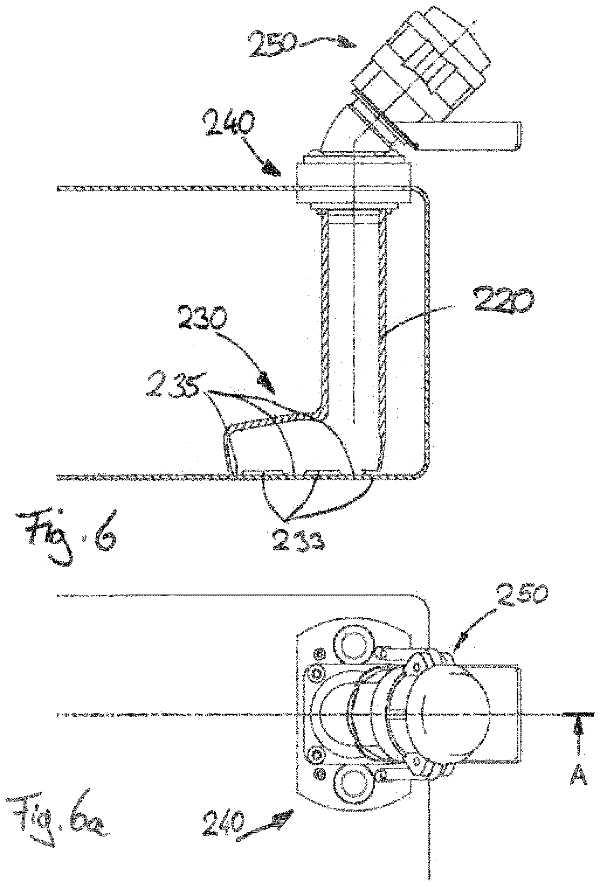

In den Figuren 6 und 6a ist eine dritte Ausführungsform der Erfindung gezeigt, die hinsichtlich Anschlusskupplung 250 und Befestigungsflansch 240 wiederum baugleich zu der zuvor erläuterten Anschlusskupplung 50 und Befestigungsflansch 40 ist. Die Ausführungsform gemäß Figuren 6 und 6a ist ebenso wie die Ausführungsform gemäß Figuren 5 und 5a mit einer exzentrischen Saugglocke 230 ausgerüstet, die wiederum einstückig an einem Saugrohr 220 ausgeformt ist. Die Saugglocke 230 weist gegenüber der in den Figuren 5 und 5a gezeigten Saugglocke 130 eine andere Geometrie auf, ist jedoch ebenso wie die Saugglocke gemäß Figuren 5, 5a mit mehreren Ausnehmungen 233 an der unteren Kante ausgerüstet, die zwischen jeweiligen Standfüßen 235 angeordnet sind. Diese Standfüße 235 sind elastisch verformbar und können bei Auftreten eines erhöhten Saugunterdrucks im Innenraum der Saugglocke nach innen einklappen um hierdurch einen erhöhten Durchlassquerschnitt durch die Ausnehmungen 233 bereit zu stellen.

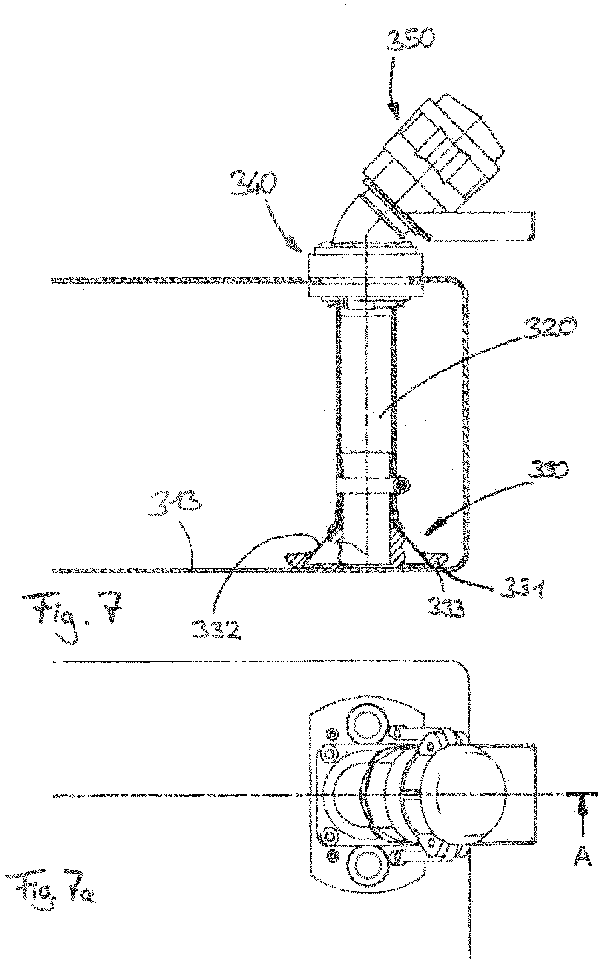

Figuren 7 und 7a zeigen eine vierte Ausführungsform der Erfindung, welche wiederum hinsichtlich der Anschlusskupplung 350 und des Befestigungsflansches 340 baugleich mit der ersten Ausführungsform ist. Auch bei dieser vierten Ausführungsform erstreckt sich ausgehend vom Befestigungsflansch 340 ein Saugrohr 320 nach vertikal unten innerhalb des Abwassersammeltanks. An diesem Saugrohr ist nun separat befestigt und folglich im Gegensatz zu den Ausführungsformen 1 bis 3 nicht einstückig eine Saugglocke 330. Die Saugglocke 330 weist eine Bodenplatte 331 auf, die in sich so steif ist, dass sie nicht unter dem Saugdruck innerhalb der Saugglocke verformbar ist. In dieser Bodenplatte 331 sind mehrere seitliche Ausnehmungen vorhanden, durch welche das Abwasser in den Innenraum der Saugglocke eintreten kann.

Die Bodenplatte 331 wird durch eine verformbare, sich trichterförmig nach unten erweiternde Membran 332 am Saugrohr 320 gehalten. Die Bodenplatte wird durch diese Membran in der in Figur 7 gezeigten abgesenkten Position gehalten und folglich auf dem Tankboden 313 des Abwassersammeltanks abgestützt. In dieser Position ist eine nahezu vollständige Entleerung mit günstiger Wirbelbildung im Bodenbereich zur Aufwirbelung von Sedimenten möglich. Wird jedoch eine oder mehrere der in dieser Stellung mit kleinem Durchschnittsquerschnitt ansaugenden Ansaugöffnungen 333 verstopft, so steigt der Absaugunterdruck in der Saugglocke 330. Der steigende Absaugunterdruck wirkt auf die Bodenplatte 331 und hebt diese unter gleichzeitiger Verformung der Membran 332 an. Die Durchlassquerschnitte der Ansaugöffnungen 333 werden hierdurch vergrößert und Feststoffe können in die Saugglocke gelangen. Sobald der Absaugunterdruck in der Saugglocke in Folge des Lösens dieser Verstopfung wieder auf ein geringeres Maß abfällt, wird die Bodenplatte 331 durch die elastische Rückstellkraft der Membran 331 wieder in die abgesenkte Position zurückbewegt.

## Patentansprüche

1. Abwassersammeltank (10) für eine Sanitäreinrichtung, insbesondere für ein Fahrzeug mit einer eingebauten Sanitäreinrichtung, umfassend
- einen Tankboden (13) und eine Tankseitenwand (12), die einen Tankinnenraum umschließen,
- einen Einlassanschluss (14) und
- eine Auslassvorrichtung,
wobei die Auslassvorrichtung aufweist:
- eine Auslassöffnung mit einer Anschlusskupplung (50) zum Anschluss einer Absaugeinrichtung, und
- einen Absaugkanal (20), der sich ausgehend von der Auslassöffnung in Schwerkraftrichtung nach unten zu einer oder mehreren Ansaugöffnungen innerhalb des Abwassersammeltanks erstreckt,
wobei die eine oder mehrere Ansaugöffnungen durch Ausnehmungen (33) gebildet werden, deren Durchtrittsquerschnitt durch den Tankboden (13) des Abwassersammeltanks und einen Ansaugöffnungsrand (33a) begrenzt werden, wobei der Ansaugöffnungsrand mit einer beweglichen Unterdruckwirkfläche (34) verbunden ist und mittels einer Vorspannung in einer abgesenkten ersten Stellung gehalten ist, so dass die Ansaugöffnungen
- in der ersten Stellung, in der ein erster Saugunterdruck im Absaugkanal (20) auf die Unterdruckwirkfläche (34) einwirkt, in einem ersten Abstand zum Tankboden (13) angeordnet ist, und
- in einer zweiten Stellung, in der ein zweiter Saugunterdruck im Absaugkanal (20) auf die Unterdruckwirkfläche (34) einwirkt, der höher ist als der erste Saugunterdruck, in einem zweiten Abstand zum Tankboden angeordnet ist, der größer ist als der erste Abstand, indem der auf die Unterdruckwirkfläche wirkende zweite Saugunterdruck eine gegen die Vorspannung wirkende Hebekraft auf den Ansaugöffnungsrand (33a) ausübt und durch Anheben des Ansaugöffnungsrands eine Vergrößerung des Durchtrittsquerschnitts bewirkt.

2. Abwassersammeltank nach Anspruch 1,
**dadurch gekennzeichnet, dass** die Ansaugöffnung (33) in einem Abstand zum Tankboden (13) liegt, der kleiner als 10 % der Gesamthöhe des Abwassersammeltanks ist.

3. Abwassersammeltank nach einem der vorhergehenden Ansprüche,
**dadurch gekennzeichnet, dass** die Ansaugöffnung (33) an einer Saugglocke (30) ausgebildet ist, deren Abmessung in der Ebene des Tankbodens größer ist als der Querschnitt des Absaugkanals.

4. Abwassersammeltank nach Anspruch 3,
**dadurch gekennzeichnet, dass** die Saugglocke (30) exzentrisch zu einer Längsachse des Absaugkanals angeordnet ist.

5. Abwassersammeltank nach Anspruch 3 oder 4,
**dadurch gekennzeichnet, dass** die Saugglocke (30) faltbar ausgebildet ist und aus einem eingefalteten Zustand, in dem sie einen ersten Umfang quer zur Längserstreckung des Absaugkanals aufweist, in einen ausgefalteten Zustand entfaltet werden kann, in dem sie einen zweiten Umfang quer zur Längserstreckung des Absaugkanals aufweist, der größer ist als der erste Umfang.

6. Abwassersammeltank nach Anspruch 2 mit einer Saugglocke nach einem der Ansprüche 3 bis 5,
**dadurch gekennzeichnet, dass** der die Ansaugöffnung begrenzende Ansaugöffnungsrand (33a) und die Unterdruckwirkfläche (34) einstückig an der Saugglocke (30) ausgebildet sind.

7. Abwassersammeltank nach einem der vorhergehenden Ansprüche,
**dadurch gekennzeichnet, dass** die Anschlusskupplung (50) oberhalb eines abgewinkelten Abschnitts des Absaugkanals (20) angeordnet ist, wobei vorzugsweise der abgewinkelte Abschnitt ausgehend von einer Durchtrittsrichtung im Bereich der Anschlusskupplung von 0° bis 75°, insbesondere 45° zur Horizontalen zu einer Durchtrittsrichtung von 75° bis 105°, vorzugsweise 90° zur Horizontalen im Bereich des Absaugkanals abgewinkelt ist.

8. Abwassersammeltank nach einem der vorhergehenden Ansprüche,
**dadurch gekennzeichnet, dass** die Anschlusskupplung (50) eine Bajonettkupplung oder eine Schraubkupplung ist.

9. Sanitäreinrichtung, mit einem Abwassersammeltank nach einem der vorhergehenden Ansprüche, insbesondere für ein Fahrzeug wie einen Reisebus.

10. Nachrüstabsaugeinrichtung für einen Abwassersammeltank einer Sanitäreinrichtung, insbesondere einer in einem Fahrzeug wie einem Reisebus eingebauten Sanitäreinrichtung, umfassend
- einen Einlassanschluss (14) und
- einen Auslassvorrichtung,
die Auslassvorrichtung aufweisend:
- eine Auslassöffnung mit einer Anschlusskupplung (50) zum Anschluss einer Absaugeinrichtung, und
- einen Absaugkanal (20), der sich ausgehend von der Auslassöffnung in Schwerkraftrichtung nach unten zu einer oder mehreren Ansaugöffnungen innerhalb des Abwassersammeltanks erstreckt,
wobei die eine oder mehrere Ansaugöffnungen durch Ausnehmungen (33) gebildet werden, deren Durchtrittsquerschnitt durch einen Tankboden (13) des Abwassersammeltanks und einen Ansaugöffnungsrand (33a) begrenzt werden, wobei der Ansaugöffnungsrand mit einer beweglichen Unterdruckwirkfläche (34) verbunden ist und mittels einer Vorspannung in einer abgesenkten ersten Stellung gehalten ist, so dass die Ansaugöffnungen
- in der ersten Stellung, in der ein erster Saugunterdruck im Absaugkanal (20) auf die Unterdruckwirkfläche (34) einwirkt, in einem ersten Abstand zum Tankboden (13) angeordnet ist, und
- in einer zweiten Stellung, in der ein zweiter Saugunterdruck im Absaugkanal (20) auf die Unterdruckwirkfläche (34) einwirkt, der höher ist als der erste Saugunterdruck, in einem zweiten Abstand zum Tankboden (13) angeordnet ist, der größer ist als der erste Abstand, indem der auf die Unterdruckwirkfläche wirkende zweite Saugunterdruck eine gegen die Vorspannung wirkende Hebekraft auf den Ansaugöffnungsrand ausübt und durch Anheben des Ansaugöffnungsrands eine Vergrößerung des Durchtrittsquerschnitts bewirkt.

11. Verwendung eines Abwassersammeltanks nach einem der Ansprüche 1-8 oder einer Nachrüstabsaugeinrichtung nach Anspruch 10 in einem Fahrzeug, insbesondere einem Reisebus, mit einer eingebauten Sanitäreinrichtung.

12. Verfahren zum Leeren eines Abwassersammeltanks (10) einer Sanitäreinrichtung, insbesondere in einem Fahrzeug, wie einem Reisebus, mit einer eingebauten Sanitäreinrichtung, mit den Schritten:
- Anordnen einer Ansaugöffnung innerhalb des Abwassersammeltanks oberhalb eines Tankbodens (13),
- Anschließen einer Absaugeinrichtung an eine Auslassöffnung mit einer Anschlusskupplung (50), und
- Absaugen von Abwasser aus dem Abwassersammeltank (10) durch einen Absaugkanal (20), der die Auslassöffnung mit der Ansaugöffnung verbindet und sich ausgehend von der Auslassöffnung in Schwerkraftrichtung nach unten zu der Ansaugöffnung erstreckt,
wobei die Ansaugöffnung durch den Tankboden (13) und einen Ansaugöffnungsrand (33a) begrenzt wird, der mit einer Unterdruckwirkfläche (34) verbunden ist, auf die ein Saugunterdruck im Absaugkanal wirkt, sodass der Ansaugöffnungsrand (33a)
- bei einem ersten Saugunterdruck im Absaugkanal (20) mittels einer Vorspannung in einer ersten Stellung gehalten wird in der der Ansaugöffnungsrand in einem ersten Abstand zum Tankboden (13) angeordnet ist, und
- die Unterdruckwirkfläche (34) bei einem zweiten Saugunterdruck im Absaugkanal (20), der höher ist als der erste Saugunterdruck, eine gegen die Vorspannung wirkende Hebekraft auf den Ansaugöffnungsrand (33a) ausübt, sodass der Ansaugöffnungsrand bei dem zweiten Saugunterdruck in eine zweite Stellung bewegt wird, in der der Ansaugöffnungsrand in einem zweiten Abstand zum Tankboden angeordnet ist, der größer ist als der erste Abstand.

13. Verfahren nach Anspruch 12,
**dadurch gekennzeichnet, dass** der Ansaugöffnungsrand (33a) aus der ersten in die zweite Stellung angehoben wird, indem sich ein Teil einer die Saugglocke (30) begrenzenden Wand verformt.

14. Verfahren nach einem der vorhergehenden Ansprüche 12-13,
**dadurch gekennzeichnet, dass** die Ansaugöffnung in einem Abstand zum Tankboden (13) angeordnet wird, der kleiner als 10% der Gesamthöhe des Abwassersammeltanks ist und insbesondere in dieser Höhe fest installiert wird.

## Claims

1. Waste water collection tank (10) for a sanitary device, in particular for a vehicle with a built-in sanitary device, comprising
- a tank bottom (13) and a tank side wall (12) enclosing a tank interior,
- an inlet port (14) and
- an outlet device,
said outlet device comprising:
- an outlet opening with a connection coupling (50) for connecting a suction device, and
- a suction channel (20) extending from the outlet opening downward in the direction of gravity to one or more suction openings within the wastewater collection tank,
wherein
the one or more suction openings are formed by recesses (33) whose passage cross-section is delimited by the tank bottom (13) of the waste water collecting tank and a suction opening rim (33a), wherein the suction opening rim is connected to a movable vacuum effective surface (34) and is held in a lowered first position by means of a bias, so that the suction openings are
- in the first position, in which a first suction vacuum in the suction channel (20) acts on the vacuum effective surface (34), is arranged at a first distance from the tank bottom (13), and
- in a second position, in which a second suction vacuum in the suction channel (20) acts on the vacuum effective surface (34), which is higher than the first suction vacuum, is arranged at a second distance from the tank bottom, which is greater than the first distance, in that the second suction vacuum acting on the vacuum effective surface exerts a lifting force, which acts against the bias, on the suction opening rim (33a) and, by raising the suction opening rim, causes an increase in the passage cross section.

2. Wastewater collection tank according to claim 1,
**characterized in that** the suction opening (33) is located at a distance from the tank bottom (13) which is less than 10% of the total height of the wastewater collection tank.

3. Wastewater collection tank according to any one of the preceding claims, **characterized in that** the suction opening (33) is formed on a suction bell (30) whose dimension in the plane of the tank bottom is larger than the cross-section of the suction channel.

4. Wastewater collection tank according to claim 3,
**characterized in that** the suction bell (30) is arranged eccentrically to a longitudinal axis of the suction channel.

5. Wastewater collection tank according to claim 3 or 4,
**characterized in that** the suction bell (30) is foldable and can be unfolded from a folded condition in which it has a first circumference transverse to the longitudinal extension of the suction channel to an unfolded condition in which it has a second circumference transverse to the longitudinal extension of the suction channel which is larger than the first circumference.

6. A wastewater collection tank according to claim 2 comprising a suction bell according to any one of claims 3 to 5,
**characterized in that** the suction opening rim (33a) defining the intake opening and the vacuum effective surface (34) are formed integrally on the suction bell (30).

7. Wastewater collection tank according to any one of the preceding claims, **characterized in that** the connection coupling (50) is arranged above an angled section of the suction channel (20), the angled section preferably being angled, starting from a passage direction in the region of the connection coupling of 0° to 75°, in particular 45° to the horizontal, to a passage direction of 75° to 105°, preferably 90° to the horizontal, in the region of the suction channel.

8. Wastewater collection tank according to any one of the preceding claims, **characterized in that** the connection coupling (50) is a bayonet coupling or a screw coupling.

9. Sanitary device, comprising a waste water collection tank according to any one of the preceding claims, in particular for a vehicle such as a coach.

10. Retrofit suction device for a waste water collection tank of a sanitary facility, in particular a sanitary facility installed in a vehicle such as a coach, comprising
- an inlet port (14) and
- an outlet device,
the outlet device comprising:
- an outlet opening with a connection coupling (50) for connecting a suction device, and
- a suction channel (20) extending from the outlet opening downward in the direction of gravity to one or more suction openings within the wastewater collection tank,
wherein
the one or more suction openings are formed by recesses (33) whose passage cross-section is delimited by the tank bottom (13) of the waste water collecting tank and a suction opening rim (33a), wherein the suction opening rim is connected to a movable vacuum effective surface (34) and is held in a lowered first position by means of a bias, so that the suction openings are
- in the first position, in which a first suction vacuum in the suction channel (20) acts on the vacuum effective surface (34), is arranged at a first distance from the tank bottom (13), and
- in a second position, in which a second suction vacuum in the suction channel (20) acts on the vacuum effective surface (34), which is higher than the first suction vacuum, is arranged at a second distance from the tank bottom, which is greater than the first distance, in that the second suction vacuum acting on the vacuum effective surface exerts a lifting force, which acts against the bias, on the suction opening rim (33a) and, by raising the suction opening rim, causes an increase in the passage cross section.

11. Use of a wastewater collection tank according to any one of claims 1-8 or a retrofit suction device according to claim 10 in a vehicle, in particular a coach, with a built-in sanitary facility.

12. Method for emptying a waste water collection tank (10) of a sanitary device, in particular in a vehicle, such as a coach, with a built-in sanitary device, comprising the steps:
- Arranging a suction opening inside the wastewater collection tank above a tank bottom (13),
- connecting a suction device to an outlet opening with a connection coupling (50), and
- Sucking waste water from the waste water collection tank (10) through a suction channel (20) which connects the outlet opening with the suction opening and extends from the outlet opening downward in the direction of gravity to the suction opening,
wherein
the suction opening is delimited by the tank bottom (13) and a suction opening rim (33a) which is connected to a vacuum effective surface (34) on which a suction vacuum acts in the suction channel, so that the suction opening rim (33a) is
- at a first suction vacuum in the suction channel (20) is held by means of a bias in a first position in which the suction opening rim is arranged at a first distance from the tank bottom (13), and
- at a second suction vacuum in the suction channel (20), which is higher than the first suction vacuum, the vacuum effective surface (34) exerts a lifting force acting against the bias on the suction opening rim (33a), so that the suction opening rim is moved at the second vacuum suction into a second position, in which the suction opening rim is arranged at a second distance from the tank bottom, which is greater than the first distance.

13. The method according to claim 12,
**characterized in that** the suction opening rim (33a) is raised from the first to the second position by deforming a portion of a wall bounding the suction bell (30).

14. The method of any one of the preceding claims 12-13,
**characterized in that** the suction opening is arranged at a distance from the tank bottom (13) which is less than 10% of the total height of the wastewater collection tank and, in particular, is permanently installed at this height.

## Revendications

1. Réservoir de collecte d'eaux usées (10) pour un dispositif sanitaire, en particulier pour un véhicule avec un dispositif sanitaire intégré, comprenant
- un fond de réservoir (13) et une paroi latérale de réservoir (12) qui entourent un espace intérieur de réservoir,
- un raccord d'entrée (14) et
- un dispositif de sortie,
dans lequel le dispositif de sortie présente :
- une ouverture de sortie avec un couplage de raccordement (50) pour le raccordement d'un dispositif d'aspiration, et
- un canal d'aspiration (20) qui s'étend à partir de l'ouverture de sortie dans le sens de la force de gravité vers le bas à une ou plusieurs ouvertures d'aspiration à l'intérieur du réservoir de collecte d'eaux usées,
dans lequel les une ou plusieurs ouvertures d'aspiration sont formées par des évidements (33), dont la section transversale de passage est délimitée par le fond de réservoir (13) du réservoir de collecte d'eaux usées et un bord d'ouverture d'aspiration (33a), dans lequel le bord d'ouverture d'aspiration est relié à une surface active de dépression (34) mobile et est maintenu au moyen d'une précontrainte dans une première position abaissée de sorte que les ouvertures d'aspiration
- dans la première position, dans laquelle une première dépression d'aspiration dans le canal d'aspiration (20) agit sur la surface active de dépression (34), soient agencées à une première distance du fond de réservoir (13), et
- dans une seconde position, dans laquelle une seconde dépression d'aspiration dans le canal d'aspiration (20) agit sur la surface active de dépression (34), qui est supérieure à la première dépression d'aspiration, soient agencées à une seconde distance du fond de réservoir, qui est supérieure à la première distance, en ce que la seconde dépression d'aspiration agissant sur la surface active de dépression exerce une force de levage agissant contre la précontrainte sur le bord d'ouverture d'aspiration (33a) et provoque une augmentation de la section transversale de passage par levage du bord d'ouverture d'aspiration.

2. Réservoir de collecte d'eaux usées selon la revendication 1,
**caractérisé en ce que** l'ouverture d'aspiration (33) se trouve à une distance du fond de réservoir (13) qui est inférieure à 10 % de la hauteur entière du réservoir de collecte d'eaux usées.

3. Réservoir de collecte d'eaux usées selon l'une des revendications précédentes,
**caractérisé en ce que** l'ouverture d'aspiration (33) est réalisée sur une ventouse (30), dont la dimension dans le plan du fond de réservoir est supérieure à la section transversale du canal d'aspiration.

4. Réservoir de collecte d'eaux usées selon la revendication 3,
**caractérisé en ce que** la ventouse (30) est agencée de manière excentrée à un axe longitudinal du canal d'aspiration.

5. Réservoir de collecte d'eaux usées selon la revendication 3 ou 4,
**caractérisé en ce que** la ventouse (30) est réalisée de manière pliable et peut être dépliée d'un état plié, dans lequel elle présente une première périphérie transversalement à l'étendue longitudinale du canal d'aspiration, dans un état déplié, dans lequel elle présente une seconde périphérie transversalement à l'étendue longitudinale du canal d'aspiration qui est supérieure à la première périphérie.

6. Réservoir de collecte d'eaux usées selon la revendication 2 avec une ventouse selon l'une des revendications 3 à 5,
**caractérisé en ce que** le bord d'ouverture d'aspiration (33a) délimitant l'ouverture d'aspiration et la surface active de dépression (34) sont réalisés d'un seul tenant au niveau de la ventouse (30).

7. Réservoir de collecte d'eaux usées selon l'une des revendications précédentes,
**caractérisé en ce que** le couplage de raccordement (50) est agencé au-dessus d'une section coudée du canal d'aspiration (20), dans lequel la section coudée est de préférence coudée à partir d'un sens de passage dans la zone du couplage de raccordement de 0° à 75°, en particulier à 45° par rapport à l'horizontale à un sens de passage de 75° à 105°, de préférence à 90° par rapport à l'horizontale dans la zone du canal d'aspiration.

8. Réservoir de collecte d'eaux usées selon l'une des revendications précédentes,
**caractérisé en ce que** le couplage de raccordement (50) est un couplage à baïonnette ou un couplage à vis.

9. Dispositif sanitaire, avec un réservoir de collecte d'eaux usées selon l'une des revendications précédentes, en particulier pour un véhicule comme un autocar.

10. Dispositif d'aspiration de mise à niveau pour un réservoir de collecte d'eaux usées d'un dispositif sanitaire, en particulier un dispositif sanitaire intégré dans un véhicule comme un autocar, comprenant
- un raccord d'entrée (14) et
- un dispositif de sortie,
le dispositif de sortie présentant :
- une ouverture de sortie avec un couplage de raccordement (50) pour le raccordement d'un dispositif d'aspiration, et
- un canal d'aspiration (20) qui s'étend à partir de l'ouverture de sortie dans le sens de la force de gravité vers le bas à une ou plusieurs ouvertures d'aspiration à l'intérieur du réservoir de collecte d'eaux usées,
dans lequel les une ou plusieurs ouvertures d'aspiration sont formées par des évidements (33), dont la section transversale de passage est délimitée par un fond de réservoir (13) du réservoir de collecte d'eaux usées et un bord d'ouverture d'aspiration (33a), dans lequel le bord d'ouverture d'aspiration est relié à une surface active de dépression (34) mobile et est maintenu au moyen d'une précontrainte dans une première position abaissée de sorte que les ouvertures d'aspiration du canal d'aspiration (20)
- soient agencées dans la première position, dans laquelle une première dépression d'aspiration agit dans le canal d'aspiration (20) sur la surface active de dépression (34), à une première distance du fond de réservoir (13), et
- soient agencées dans une seconde position, dans laquelle une seconde dépression d'aspiration dans le canal d'aspiration (20) agit sur la surface active de dépression (34), qui est supérieure à la première dépression d'aspiration, à une seconde distance du fond de réservoir (13) qui est supérieure à la première distance, en ce que la seconde dépression d'aspiration agissant sur la surface active de dépression exerce une force de levage agissant contre la précontrainte sur le bord d'ouverture d'aspiration et provoque, par levage du bord d'ouverture d'aspiration, une augmentation de la section transversale de passage.

11. Utilisation d'un réservoir de collecte d'eaux usées selon l'une des revendications 1 à 8 ou un dispositif d'aspiration de mise à niveau selon la revendication 10 dans un véhicule, en particulier un autocar, avec un dispositif sanitaire intégré.

12. Procédé de vidange d'un réservoir de collecte d'eaux usées (10) d'un dispositif sanitaire, en particulier dans un véhicule, comme un autocar, avec un dispositif sanitaire intégré, avec les étapes suivantes :
- l'agencement d'une ouverture d'aspiration à l'intérieur du réservoir de collecte d'eaux usées au-dessus d'un fond de réservoir (13),
- le raccordement d'un dispositif d'aspiration à une ouverture de sortie avec un couplage de raccordement (50), et
- l'aspiration d'eaux usées du réservoir de collecte d'eaux usées (10) par un canal d'aspiration (20) qui relie l'ouverture de sortie à l'ouverture d'aspiration et s'étend à partir de l'ouverture de sortie dans le sens de la force de gravité vers le bas à l'ouverture d'aspiration,
dans lequel l'ouverture d'aspiration est délimitée par le fond de réservoir (13) et un bord d'ouverture d'aspiration (33a) qui est relié à une surface active de dépression (34), sur laquelle agit une dépression d'aspiration dans le canal d'aspiration de sorte que le bord d'ouverture d'aspiration (33a)
- soit maintenu pour une première dépression d'aspiration dans le canal d'aspiration (20) au moyen d'une précontrainte dans une première position, dans laquelle le bord d'ouverture d'aspiration est agencé à une première distance du fond de réservoir (13), et
- la surface active de dépression (34) exerce, pour une seconde dépression d'aspiration dans le canal d'aspiration (20) qui est supérieure à la première dépression d'aspiration, une force de levage agissant contre la précontrainte sur le bord d'ouverture d'aspiration (33a) de sorte que le bord d'ouverture d'aspiration soit déplacé, pour la seconde dépression d'aspiration, dans une seconde position, dans laquelle le bord d'ouverture d'aspiration est agencé à une seconde distance du fond de réservoir qui est supérieure à la première distance.

13. Procédé selon la revendication 12, **caractérisé en ce que** le bord d'ouverture d'aspiration (33a) est levé de la première dans la seconde position, **en ce qu'**une partie d'une paroi délimitant la ventouse (30) se déforme.

14. Procédé selon l'une des revendications précédentes 12 à 13,
**caractérisé en ce que** l'ouverture d'aspiration est agencée à une distance du fond de réservoir (13) qui est inférieure à 10 % de la hauteur entière du réservoir de collecte d'eaux usées et en particulier est fixement installée à cette hauteur.
